# FASCICULE DE BREVET EUROPEEN

(11) **EP 2 962 553 B1**
(45) Date de publication et mention de la délivrance du brevet: **09.08.2017**
(21) Numéro de dépôt: 15174865.4
(22) Date de dépôt: 01.07.2015
(51) Int. Cl.: A01K 1/00

(54) **CLOISON DE LOGETTE DE STABULATION**
TRENNWAND EINER LIEGEBOX FÜR DIE STALLHALTUNG VON TIEREN
COWSHED HOUSING WALL

(30) Priorité: 02.07.2014 FR 1456307
(43) Date de publication de la demande: 06.01.2016
(73) Titulaire: Jourdain, 45300 Escrennes (FR)
(72) Inventeur: Jourdain, Dominique, 45300 Escrennes (FR)
(74) Mandataire: Intès, Didier Gérard André

(56) Documents cités:
- EP-A2- 0 447 822
- EP-A2- 2 206 426
- DE-A1- 2 923 384
- DE-U- 1 922 264
- DE-U1- 9 113 830

## Description

La présente invention concerne une cloison de logette de stabulation, comprenant une structure de cloison verticale qui porte une portion déformable.

Les logettes sont les emplacements occupés par les animaux, en particulier des bovins, élevés en stabulation. Les cloisons de logette servent à délimiter latéralement les logettes les unes par rapport aux autres. Classiquement, les cloisons de logette sont réalisées en matériau rigide, en particulier à partir de tubes métalliques. Il importe en effet de bien délimiter les logettes les unes par rapport aux autres, en canalisant chaque animal dans l'espace qui lui est réservé. Cependant, les animaux bougent évidemment dans leurs logettes et sont amenés à entrer en contact avec les cloisons des logettes. Ce contact peut être parfois assez brutal, par exemple lorsqu'un animal se couche. En effet, s'agissant par exemple des bovins, ces animaux se couchent en rapprochant leur corps du sol puis, à partir d'une distance de l'ordre de 60 cm, se laissent tomber pesamment au sol. Si dans ce mouvement, leur corps vient en contact avec un élément rigide, il peut arriver que l'animal se blesse ou souffre de contusions.

La demande de brevet français n° 2 930 113 se préoccupe de ce problème et propose une cloison pour stabulation en logettes comportant une armature avec une branche à laquelle un volet est suspendu de manière souple. Cependant, ce système n'est pas vraiment convainquant. D'une part, il est de fabrication et de montage relativement complexes. De plus, le volet forme un élément occultant qui ne favorise pas la visibilité entre les différentes logettes. En outre, lorsqu'un animal entre en contact avec lui, le volet s'escamote sans induire de contrainte de réaction contre le corps l'animal. Il en résulte que l'animal peut aisément, par exemple lorsqu'il se couche, empiéter sur la logette voisine et que le volet n'empêche pas en lui-même que l'animal ne se blesse contre la partie plus rigide de l'armature. De plus, l'animal peut se coucher en biais, au risque d'être piétiné par l'animal voisin, qui peut notamment lui marcher sur le pis et endommager un trayon.

La demande de modèle d'utilité allemand n° DE 8900913 propose une solution dans laquelle la cloison de logette présente une partie d'extrémité pouvant pivoter autour d'un axe horizontal, l'amplitude de pivotement étant limitée par des butées en caoutchouc montées sur le support. Ce système n'est pas non plus satisfaisant dans la mesure où son montage est relativement complexe, mobilisant un assez grand nombre de pièces qui doivent être correctement réglées les unes par rapport aux autres, et où, tant que l'amplitude maximale de pivotement n'est pas atteinte, le pivotement est totalement libre, n'empêchant donc pas l'animal d'empiéter sur la logette voisine, alors que, dès lors que l'amplitude est atteinte, le pivotement est bloqué de sorte que si l'animal est en contact lors du blocage avec l'élément pivotant, il risque de se blesser malgré la présence de cet élément pivotant.

D'autres systèmes remplacent les tubes métalliques des cloisons de logettes classiques par des tubes flexibles, en plastique souple avec une extrémité libre. Cependant, la flexibilité de ces tubes est alors trop importante pour qu'ils permettent efficacement de canaliser les animaux dans leurs logettes.

Le document DE 29 23 384 A1 divulgue une cloison de logette dans laquelle un manchon fileté est relié à la structure de cloison par des câbles et des sangles.

L'invention vise à améliorer l'état de la technique, en proposant une cloison de logette qui constitue à la fois une partition efficace entre des logettes adjacentes, et limite efficacement les risques que les animaux ne se blessent par contact avec la cloison lors de leur mouvement dans la logette.

Ce but est atteint grâce au fait que la portion déformable comprend un agencement de tube comprenant au moins deux tronçons de tube rigide reliés entre eux par un élément de connexion intermédiaire élastiquement déformable, l'agencement de tube étant relié à la structure de cloison à chacune de ses deux extrémités via un élément de connexion d'extrémité élastiquement déformable et, selon l'invention, au fait que au moins la partie médiane des éléments de connexion d'extrémité est en matériau déformable de type élastomère, composite ou plastique souple.

En particulier, le matériau composite peut comprendre de la résine et des fibres).

Dans l'agencement de tube, les tronçons de tube sont rigides et opposent donc, au contact avec le corps d'un animal, une certaine résistance, d'autant que l'agencement de tube est fixé à ses deux extrémités. Cependant, dans la mesure où il est relié à la structure de cloison via des éléments de connexion d'extrémité élastiquement déformables, il peut légèrement se déplacer lors d'un contact avec le corps de l'animal, de manière à ne pas le blesser. La rigidité des tronçons de tube rigide, combinée à l'élasticité de l'élément de connexion, permet un léger déplacement de l'agencement de tube, tout en faisant en sorte que ce dernier oppose une résistance au corps de l'animal, suffisante pour que ce dernier n'ait pas tendance à empiéter sur la logette voisine.

En réalisant l'agencement de tube sous la forme de plusieurs tronçons de tube rigide reliés entre eux par un ou plusieurs éléments de connexion intermédiaires élastiquement déformables, on augmente la plage de déformation possible de l'agencement de tube, par rapport au cas où il aurait un seul tronçon de tube rigide, tout en conservant un agencement d'allure générale relativement rigide, s'opposant efficacement aux déplacements intempestifs de l'animal qui se tient dans la logette, et évitant en particulier que cet animal n'empiète sur la logette voisine. Les tronçons de tube rigide peuvent être en métal, ou bien en plastique ou en composite (tel que résine et fibres) rigide. Les tronçons du tube rigide présentent une rigidité telle que, lorsqu'un animal de poids moyen de l'espèce pour laquelle la logette est conçue, s'appuie contre les tronçons, ceux-ci n'ont pas tendance à se fléchir sous la pression ainsi exercée par l'animal, en particulier, sous une telle pression, ils ne présentent pas de flèche élastique ou plastique notable.

Chaque élément de connexion d'extrémité peut être réalisé en une seule pièce, en un matériau de type élastomère, composite ou plastique souple. Ce matériau est à la fois peu coûteux, et présente l'élasticité souhaitée.

Selon le niveau d'élasticité souhaité, chaque élément de connexion peut être réalisé en un seul matériau ou, au contraire, en plusieurs matériaux ayant des compositions et des élasticités différentes.

Selon une option, les éléments de connexion d'extrémité comprennent chacun deux parties de bout respectivement reliées rigidement à l'agencement de tube et à la structure de cloison, et une partie médiane déformable.

Ainsi, l'assemblage de l'agencement de tube avec la structure de cloison est simple et fiable, et la partie déformable, qui permet à l'agencement de tube de s'effacer légèrement lorsqu'elle est au contact du corps d'un animal, est localisée de manière à éviter un effacement trop aisé.

Optionnellement, la partie médiane des éléments de connexion d'extrémité présente la forme de deux troncs de cône, reliés par leurs extrémités de petit diamètre.

Cette forme en "diabolo" permet une déformation maîtrisée des éléments de connexion, tout en ayant une conformation simple, aisée à réaliser à faible coût.

Optionnellement, les éléments de connexion d'extrémité comprennent chacun deux parties de bout qui coopèrent par emmanchement avec, respectivement, l'agencement de tube et la structure de cloison.

Dans ce cas, on peut choisir que les parties de bout de chaque élément de connexion d'extrémité soient retenues par rapport à l'agencement de tube et à la structure de cloison par des moyens de retenue tels que des tiges transversales de retenue, en particulier des vis.

La coopération par emmanchement est particulièrement simple à mettre en oeuvre, sa sécurisation par des tiges transversales étant également simple.

Optionnellement, l'élément de connexion intermédiaire élastiquement déformable est analogue aux éléments de connexion d'extrémité.

Optionnellement, les tronçons de tube rigide de l'agencement de tube sont gainés.

On choisit avantageusement la position de la portion déformable pour que ce soit avec cette portion que le corps de l'animal entre le plus probablement en contact lors des mouvements de ce dernier, en particulier lorsqu'il se couche. En particulier, la portion déformable peut être une portion basse de la cloison de logette (que l'animal visualise peu ou très mal lorsqu'il se couche) et, plus particulièrement, une portion basse, située vers l'extrémité avant de la cloison, à laquelle l'animal tourne le dos, ainsi qu'on le verra. Le fait de gainer les tronçons de tube rigide permet de faire en sorte que le contact de l'agencement de tube avec la peau de l'animal soit doux, et sans écart de température excessif par rapport à la peau de l'animal. En particulier, par temps froid, un contact direct avec une partie métallique pouvant être très froide, pourrait augmenter les risques de stress de l'animal.

Optionnellement, la structure de cloison forme une partie de cadre, présentant un décrochement inférieur, dans lequel est reçue la portion déformable.

Cette forme est particulièrement adaptée aux conditions de la stabulation, le décrochement étant tel que, lorsqu'un animal se couche, son corps n'entre pas en contact avec la structure de cloison en elle-même mais, seulement, avec la portion basse déformable.

Optionnellement, la structure de cloison comprend un tube formant une boucle.

Ainsi, la structure de cloison est réalisée avec une forme particulièrement simple et peu coûteuse.

L'invention sera bien comprise et ses avantages apparaîtront mieux à la lecture de la description détaillée qui suit, d'un mode de réalisation représenté à titre d'exemples non limitatifs. La description se réfère aux dessins annexés, sur lesquels :
- la figure 1 est une vue de côté d'une cloison de logette selon l'invention ;
- la figure 2 est une vue de côté d'une cloison de logette selon l'invention, selon une variante ;
- la figure 3 montre l'agencement de tube et les éléments de connexion à l'état démonté ;
- la figure 4 est un agrandissement de la zone IV de la figure 1 ; et
- la figure 5 montre en perspective un élément de connexion.

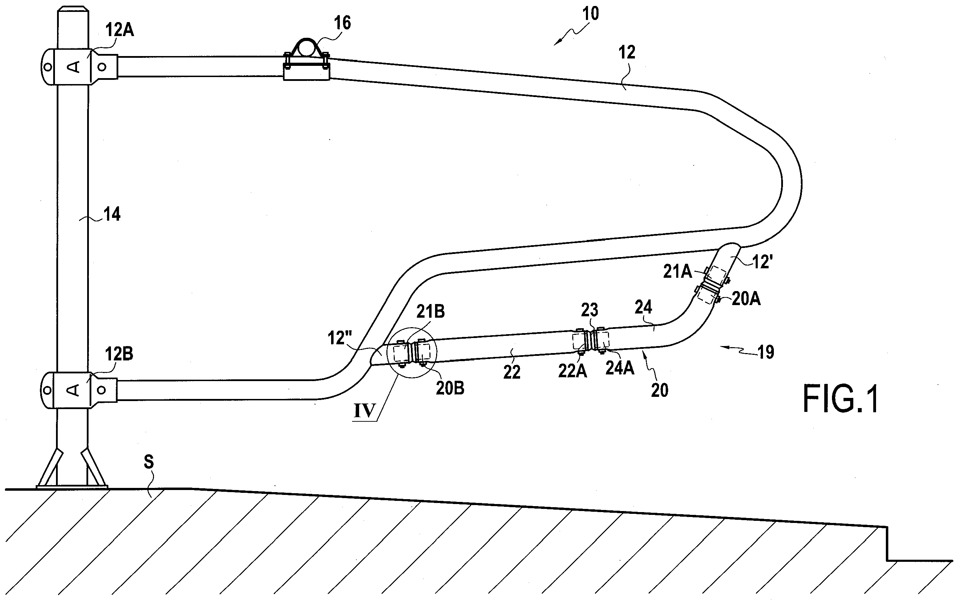

La cloison de logette représentée sur la figure 1 comprend une structure de cloison verticale 10 qui, en l'espèce, comprend un tube 12 formant une boucle laquelle, lorsque la cloison est montée, se trouve dans un plan vertical. De manière connue en soi, la boucle est formée par cintrages successifs du tube dans des zones déterminées.

Dans l'exemple de la figure 1, cette structure de cloison est portée par un poteau 14 fixé au sol S, les deux extrémités respectivement 12A et 12B de la boucle 12 formée par le tube étant fixées au poteau, par exemple par des bracelets ou analogues.

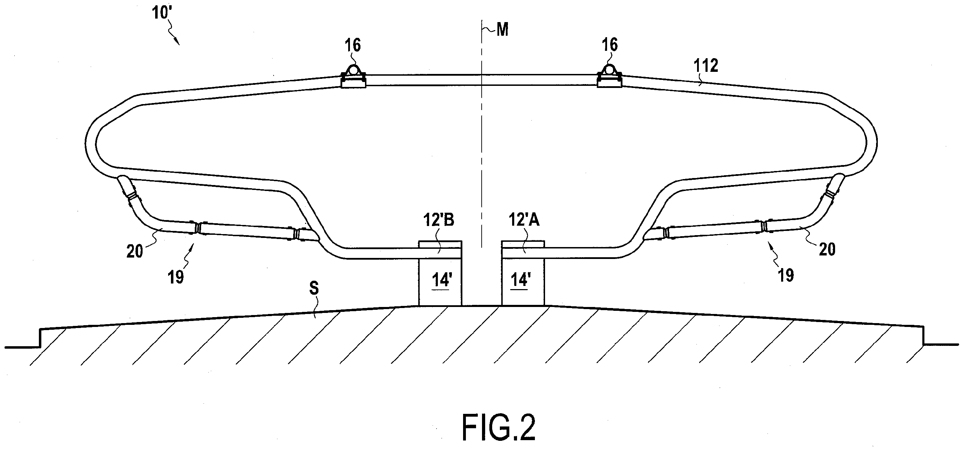

Bien entendu, l'invention s'applique à d'autres formes de structure de cloison, telles que celles de la figure 2, où la structure de cloison 10' est également formée par un tube formant une boucle 112, mais cette boucle est symétrique par rapport à un plan vertical médian M. En effet, la cloison de logette représentée sur la figure 2 sert pour délimiter deux logettes en face à face, par rapport à deux logettes adjacentes, également en face à face, les têtes des animaux dans leurs logettes respectives étant tournées vers la ligne de médiane M. Ainsi, en l'espèce, les extrémités 12'A et 12'B de la boucle 112, en l'espèce ses extrémités basses, sont fixées à des supports 14', eux-mêmes fixés au sol S.

De manière connue en soi, sur la portée supérieure du tube formant la boucle, la structure de cloison peut comporter des fixations 16 pour des traverses horizontales.

Les fixations 16 sont situées vers le fond de la logette, c'est-à-dire vers la partie de la logette proche du poteau 14 (figure 1) ou de la ligne médiane M (figure 2) éloignée de son entrée. En effet, l'animal entrant dans la logette passe entre deux cloisons analogues par l'entrée délimitée vers des extrémités opposées au poteau ou à la ligne médiane, et sa tête est tournée vers le poteau ou la ligne médiane.

Selon l'invention, la cloison de logette comporte une portion déformable 19 qui est portée par la structure de cloison verticale. Cette portion déformable comprend un agencement de tube 20 dont les extrémités 20A et 20B sont reliées à la structure de cloison par des éléments de connexion d'extrémité élastiquement déformables. Bien entendu, un tel agencement de tube est représenté sur la figure 1, mais deux agencements de tube sont représentés sur la figure 2, soit un agencement de tube pour chacune des deux logettes en vis-à-vis.

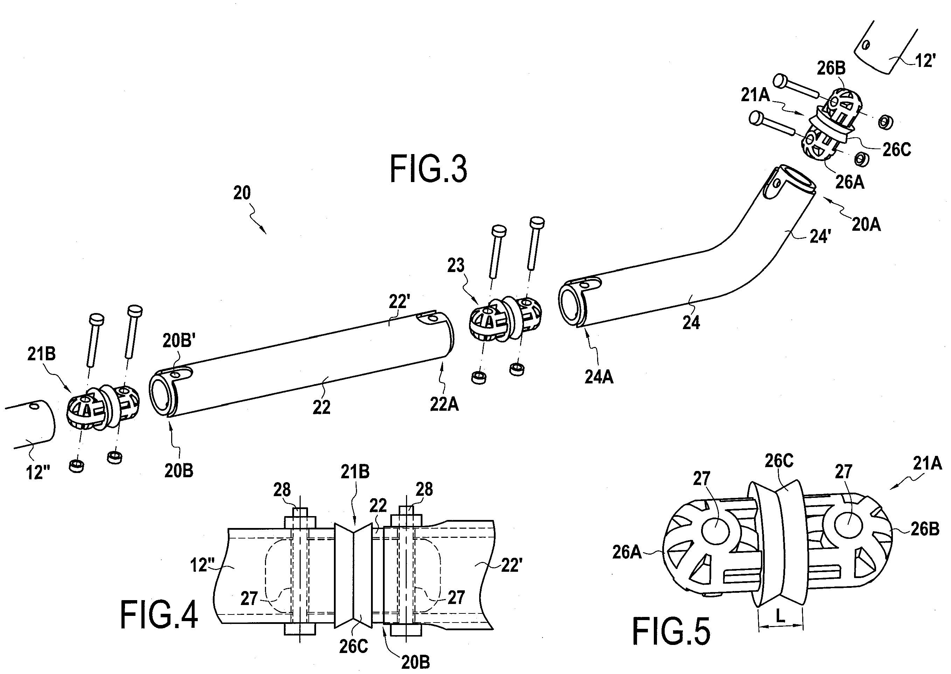

Dans les exemples représentés, et comme on le voit encore mieux sur la figure 3, cet agencement de tube comprend deux tronçons de tube rigide, respectivement 22 et 24, qui sont reliés entre eux, à leurs extrémités respectivement 22A et 24A opposées aux extrémités 20A et 20B, par un élément de connexion intermédiaire 23. Les extrémités 20A et 20B de l'agencement de tube sont reliées à la structure de cloison par des éléments de connexion d'extrémité, respectivement 21A et 21B.

Les tronçons de tube sont rigides et, par exemple, ils peuvent être formés dans un tube du même type que la structure de cloison verticale. Il s'agit en particulier d'un tube d'acier galvanisé. Cependant, comme indiqué précédemment, les tronçons de tube peuvent également être réalisé dans un autre matériau rigide, tel que du plastique ou un composite, en particulier un composite de résine et de fibres de rigidification, telles que des fibres de verre.

Comme on le voit mieux sur la figure 3, les tronçons de tube rigide sont gainés. En effet, des gaines, respectivement 22' et 24' sont disposées autour des tronçons de tube 22 et 24, sur pratiquement toute leur longueur. Par exemple, les gaines sont formées en un matériau plastique, en particulier un élastomère ou analogue, qui est manchonné à chaud sur les tronçons de tube et rétracté radialement sur ces tronçons en se refroidissant. Les gaines peuvent également être surmoulées. La présence de gaines est surtout utile lorsque les tronçons de tube sont en métal.

Les éléments de connexion d'extrémité 21A et 21B et l'élément de connexion intermédiaire 23 étant identiques, on décrit en détail seulement l'élément de connexion 21A. Chaque élément de connexion est en l'espèce formé par un corps en élastomère, obtenu d'une seule pièce, en particulier par moulage. On relève toutefois que l'élément de connexion pourrait être réalisé en plusieurs parties liées entre elles, par exemple par surmoulage, les matériaux de ces parties ayant des élasticités différentes.

En s'intéressant donc à l'élément de connexion 21A mieux visible sur la figure 5, on voit qu'il comprend deux parties de bout, respectivement 26A et 26B, et une portion intermédiaire 26C. A l'état monté, les parties de bout sont reliées rigidement, respectivement à l'agencement de tube et à la structure de cloison. Plus précisément, la partie de bout 26A est emmanchée dans un embout tubulaire 12' solidaire de la structure de cloison, par exemple en étant soudé au tube qui forme la boucle 12, tandis que la partie de bout 26B est emmanchée dans l'extrémité 20A du tronçon de tube 24. On relève ici que, du côté de l'extrémité 20B de l'agencement de tube, le montage est le même, une partie de bout de l'élément de connexion 21B étant emmanchée dans le tronçon de tube 22, tandis que son autre extrémité est emmanchée dans un embout tubulaire 12" fixé au tube 12, par exemple par soudure.

Du fait de la liaison par emmanchement, les parties de bout de l'élément de connexion sont reliées rigidement à l'agencement de tube et, respectivement, à la structure de cloison. S'agissant de l'élément de connexion 23, ses parties de bout sont reliées rigidement à chacun des tronçons de tube 22 et 24, en étant emmanchées dans les extrémités de ces tronçons.

Dans la coopération par emmanchement qui vient d'être décrite, les parties de bout des éléments de connexion sont des éléments mâles et s'insèrent dans les extrémités ouvertes des tubes ou des manchons. Ceci est en effet avantageux lorsque, comme dans l'exemple représenté, les éléments de connexion sont en une seule pièce réalisée en élastomère ou analogue, puisque les extrémités des tubes ou des manchons dans lesquelles les parties de bout sont insérées, assurent alors leur protection et leur rigidification. On pourrait cependant prévoir un arrangement inverse, en réalisant les parties de bout sous la forme de portions de manchon, dans lesquelles les extrémités des tubes ou des embouts pourraient être insérées.

A l'état monté, comme on le voit mieux sur la figure 4, les parties médianes des éléments de connexion, telle la partie 26C, se trouvent entre les tronçons de tube ou d'embout par rapport auxquels les parties de bout sont emmanchées. Pour chaque élément de connexion, c'est donc cette partie médiane qui peut se déformer élastiquement lorsqu'un animal présent dans la logette entre au contact de l'agencement de tube.

On voit en particulier sur la figure 5 que les parties de bout des éléments de connexion présentent des nervures délimitant, pour ces parties de bout, une enveloppe de diamètre correspondant sensiblement au diamètre interne des tubes dans lesquels les parties de bout doivent être emmanchées. Ainsi, les parties de bout sont adaptées au diamètre interne des tronçons de tube et des embouts dans lesquels elles sont emmanchées, et correctement calées par rapport à eux.

Sur la figure 4, les contours des parties de bout 26A et 26B et l'épaisseur de paroi du tube 22 et de l'embout sont seulement esquissés dans un souci de simplification. On voit sur cette figure que les parties de bout des éléments de connexion d'extrémité sont retenues par rapport aux tronçons de tube et aux embouts dans lesquels elles sont emmanchées par des moyens de retenue tels que des tiges transversales de retenue. On voit en effet sur la figure 4 des tiges transversales 28, qui traversent des perçages 20B' des extrémités des tronçons de tube ou des embouts dans lesquels les parties de bout sont emmanchées, ainsi que des perçages 27 de ces parties de bout, situés en correspondance avec les perçages 20B'. Ces tiges 28 peuvent être des tiges de vis, ou des gougeons coopérant avec des écrous. Il peut également s'agir de tiges rivetées, ou bien de goupilles ou analogues.

On relève que les gaines 22' et 24' présentent les décrochements dans la région des perçages 20B', pour ne pas être endommagées par les écrous ou analogues (têtes de vis) qui retiennent les tiges 28 dans les perçages précités.

La partie médiane 26C des éléments de connexion présente la forme de deux troncs de cône reliés par leurs extrémités de petit diamètre. En l'espèce, cette partie médiane est symétrique par rapport au plan dans lequel ces deux troncs de cône se rejoignent, qui est d'ailleurs un plan de symétrie de l'ensemble de l'élément de connexion. Ainsi, ce plan définit la partie plus particulièrement déformable, comme pour un diabolo. Dans l'exemple représenté, on voit que la longueur L de la partie médiane 26C, mesurée selon l'axe de l'élément de connexion, est relativement faible, en particulier de l'ordre de 1/5^{ème} à la moitié du diamètre D des tubes, plus particulièrement de l'ordre du quart de ce diamètre. De manière générale, cette longueur L est avantageusement tout au plus du même ordre de grandeur que le diamètre D, de préférence inférieure ou égale à ce diamètre, et même inférieure ou égale à la moitié de ce diamètre.

Ainsi, lorsqu'un animal entre en contact avec l'agencement de tube, celui-ci peut s'effacer légèrement par une déformation des éléments de connexion, mais cette déformation est limitée dans son amplitude. De même, elle est fortement élastique de sorte que l'agencement de tube exerce une pression assez forte en retour sur l'animal. Ceci permet d'éviter que l'animal ne se blesse et assure qu'il sente nettement le contact avec l'agencement de tube, menant ainsi naturellement cet animal à se repositionner correctement dans sa logette.

Sur les figures 1 et 2, on relève que la portion déformable 19 qui comporte l'agencement de tube 20 est reçue dans un décrochement inférieur de la structure de cloison. Elle est également située dans la région de la structure de cloison qui est située vers l'avant de la logette, à l'opposé du poteau 14 ou de la ligne médiane M. C'est en effet cette zone, en regard de laquelle se trouvera la moitié arrière du corps de l'animal situé dans la logette, avec laquelle l'animal entrera prioritairement en contact en se couchant, et c'est à l'occasion de ce type de mouvement que les risques de blessures sont les plus forts. La structure de cloison, considérée avec le poteau 14 sur la figure 1 ou sous la forme de la boucle de la figure 2 commune à deux logettes en vis-à-vis forme une sorte de cadre avec le décrochement précité. Elle est légère, facile à fabriquer, ne formant aucun obstacle pour le regard, tout en évitant les blessures des animaux, ainsi qu'il a été indiqué.

On relève que les têtes de vis, écrous ou analogues des tiges 28 sont positionnés dans des plans verticaux, non susceptibles d'entrer en contact avec le corps de l'animal, lorsque celui-ci bouge ou s'affaisse.

## Revendications

1. Cloison de logette de stabulation, comprenant une structure de cloison verticale (10, 10') qui porte une portion déformable (19),
**caractérisée en ce que** la portion déformable comprend un agencement de tube (20) comprenant au moins deux tronçons de tube rigide (22, 24) reliés entre eux par un élément de connexion intermédiaire (23) élastiquement déformable, l'agencement de tube étant relié à la structure de cloison à chacune de ses deux extrémités (20A, 20B) via un élément de connexion d'extrémité (21A, 21B) élastiquement déformable, et **en ce que** au moins une partie médiane des éléments de connexion d'extrémité (21A, 21B) est en matériau déformable de type élastomère, composite ou plastique souple.

2. Cloison selon la revendication 1, **caractérisée en ce que** la structure de cloison (10, 10') forme une partie de cadre, présentant un décrochement inférieur, dans lequel est reçue la portion déformable (19).

3. Cloison selon la revendication 1 ou 2, **caractérisée en ce que** les éléments de connexion d'extrémité (21A, 21B) comprennent chacun deux parties de bout (26A, 26B) respectivement reliées rigidement à l'agencement de tube (20) et à la structure de cloison, et une partie médiane déformable (26C).

4. Cloison selon l'une quelconque des revendications 1 à 3, **caractérisée en ce que** la partie médiane (26C) des éléments de connexion d'extrémité présente la forme de deux troncs de cône, reliés par leurs extrémités de petit diamètre.

5. Cloison selon l'une quelconque des revendications 1 à 4, **caractérisée en ce que** les éléments de connexion d'extrémité (21A, 21B) comprennent chacun deux parties de bout (26A, 26B) qui coopèrent par emmanchement avec, respectivement, l'agencement de tube (20) et la structure de cloison (10).

6. Cloison selon la revendication 5, **caractérisée en ce que** les parties de bout (26A, 26B) de chaque élément de connexion d'extrémité sont retenues par rapport à l'agencement de tube (20) et à la structure de cloison (10) par des moyens de retenue tels que des tiges transversales de retenue (28), en particulier des vis.

7. Cloison selon l'une quelconque des revendications 1 à 6, **caractérisée en ce que** l'élément de connexion intermédiaire (23) élastiquement déformable est analogue aux éléments de connexion d'extrémité (21A, 21B).

8. Cloison selon l'une quelconque des revendications 1 à 7, **caractérisée en ce que** le ou les tronçons de tube rigide (22, 24) de l'agencement de tube sont formés en métal, en plastique ou en composite.

9. Cloison selon l'une quelconque des revendications 1 à 7, **caractérisée en ce que** le ou les tronçons de tube rigide (22, 24) de l'agencement de tube sont gainés (22', 24').

10. Cloison selon l'une quelconque des revendications 1 à 9, **caractérisée en ce que** la structure de cloison (10) comprend un tube (12, 112) formant une boucle.

## Patentansprüche

1. Stallliegebox, die eine vertikale Wandstruktur (10, 10') umfasst, die einen verformbaren Abschnitt (19) trägt,
**dadurch gekennzeichnet, dass** der verformbare Abschnitt eine Rohranordnung (20) umfasst, die mindestens zwei starre Rohrabschnitte (22, 24) umfasst, die miteinander durch ein Zwischenverbindungselement (23), das elastisch verformbar ist, verbunden sind, wobei die Rohranordnung mit der Wandstruktur an jedem ihrer zwei Enden (20A, 20B) über ein Endverbindungselement (21A, 21 B), das elastisch verformbar ist, verbunden ist, und dass mindestens ein Mittenteil der Endverbindungselemente (21A, 22B) aus verformbarem Material des Typs Elastomers, Verbundwerkstoff oder biegsamer Kunststoff besteht.

2. Wand nach Anspruch 1, **dadurch gekennzeichnet, dass** die Wandstruktur (10, 10') einen Rahmenteil bildet, der einen unteren Rücksprung, in dem der verformbare Abschnitt (19) aufgenommen ist, aufweist.

3. Wand nach Anspruch 1 oder 2, **dadurch gekennzeichnet, dass** die Endverbindungselemente (21A, 21 B) jeweils zwei Endteile (26A, 26B), die jeweils starr mit der Rohranordnung (20) und der Wandstruktur verbunden sind, und einen verformbaren Mittenteil (26C), umfassen.

4. Wand nach einem der Ansprüche 1 bis 3, **dadurch gekennzeichnet, dass** der Mittenteil (26C) der Endverbindungselemente die Form von zwei Kegelstümpfen, die durch ihre Enden mit kleinem Durchmesser verbunden sind, aufweist.

5. Wand nach einem der Ansprüche 1 bis 4, **dadurch gekennzeichnet, dass** die Endverbindungselemente (21A, 21 B) jeweils zwei Endteile (26A, 26B) umfassen, die durch Aufschrumpfen jeweils mit der Rohranordnung (20) und der Wandstruktur (10) zusammenwirken.

6. Wand nach Anspruch 5, **dadurch gekennzeichnet, dass** die Endteile (26A, 26B) jedes Endverbindungselements in Bezug zu der Rohranordnung (20) und zu der Wandstruktur (10) durch Haltemittel, wie zum Beispiel Querhalteschäfte (28), insbesondere Schrauben, zurückgehalten sind.

7. Wand nach einem der Ansprüche 1 bis 6, **dadurch gekennzeichnet, dass** das elastisch verformbare Zwischenverbindungselement (23) mit den Endverbindungselementen (21 A, 21 B) analog ist.

8. Wand nach einem der Ansprüche 1 bis 7, **dadurch gekennzeichnet, dass** der oder die Abschnitte aus starrem Rohr (22, 24) der Rohranordnung aus Metall, aus Kunststoff oder aus Verbundwerkstoff gebildet sind.

9. Wand nach einem der Ansprüche 1 bis 7, **dadurch gekennzeichnet, dass** der oder die Abschnitte aus starrem Rohr (22, 24) der Rohranordnung ummantelt (22', 24') sind.

10. Wand nach einem der Ansprüche 1 bis 9, **dadurch gekennzeichnet, dass** die Wandstruktur (10) ein Rohr (12, 112), das eine Schleife bildet, umfasst.

## Claims

1. A stable stall partition, comprising a vertical partition structure (10, 10') which bears a deformable portion (19),
**characterized in that** the deformable portion comprises a tube arrangement (20) comprising at least two rigid tube segments (22, 24) connected together through an elastically deformable intermediate connecting element (23), the tube arrangement being connected to the partition structure at each of its two ends (20A, 20B) via an elastically deformable end connecting element (21A, 21B), and **in that** at least one middle portion of the end connecting elements (21A, 21B) is in a deformable material of the elastomer, composite or flexible plastic type.

2. The partition according to claim 1, **characterized in that** the partition structure (10, 10') forms a frame portion having an inner deflection, in which the deformable portion (19) is received.

3. The partition according to claim 1 or 2, **characterized in that** the end connecting elements (21A, 21B) each comprise two endpiece portions (26A, 26B) respectively rigidly connected to the tube arrangement (20) and to the partition structure, and a deformable middle portion (26C).

4. The partition according to any of claims 1 to 3, **characterized in that** the middle portion (26C) of the end connecting elements has the shape of two cone frustums, connected through their small diameter ends.

5. The partition according to any of claims 1 to 4, **characterized in that** the end connecting elements (21A, 21B) each comprise two endpiece portions (26A, 26B) which cooperate by press-fitting with respectively the tube arrangement (20) and the partition structure (10).

6. The partition according to claim 5, **characterized in that** the endpiece portions (26A, 26B) of each end connecting element are retained relatively to the tube arrangement (20) and to the partition structure (10) by retention means such as transverse retention rods (28), in particular screws.

7. The partition according to any of claims 1 to 6, **characterized in that** the elastically deformable intermediate connecting element (23) is similar to the end connecting elements (21A, 21B).

8. The partition according to any of claims 1 to 7, **characterized in that** the rigid tube segment(s) (22, 24) of the tube arrangement are formed in metal, plastic or composite.

9. The partition according to any of claims 1 to 7, **characterized in that** the rigid tube segment(s) (22, 24) of the tube arrangement are sheathed (22', 24').

10. The partition according to any of claims 1 to 9, **characterized in that** the partition structure (10) comprises a tube (12, 112) forming a loop.
